# EUROPEAN PATENT APPLICATION

(11) **EP 2 098 552 A1**
(43) Date of publication of application: **09.09.2009**
(21) Application number: 08075170.4
(22) Date of filing: 06.03.2008
(51) Int. Cl.: C08G 63/16, C08J 7/04, C08L 67/02, C09D 5/03, C09D 167/02

(54) **Thermosetting polyester resin modified with semi-crystalline polyester for powder coatings**

(71) Applicant: Hexion Specialty Chemicals Research Belgium S.A., 1348 Ottignies Louvain-la-Neuve (BE)
(72) Inventor: Beccaria, Damiano, 12040 Sant'Albano Stura CN (IT); Bejko, Imir, 12040 Sant'Albano Stura CN (IT); Capra, Andrea, 12040 Sant'Albano Stura CN (IT)

(57) **Abstract**

A liquid semi-crystalline polyester bearing carboxyl groups is grafted to a carboxyl functional amorphous polyester resin to produce a binder suitable to provide powder coatings with excellent surface appearance, very good flow and improved resistance to outdoor exposure.

## Description

A liquid semi-crystalline polyester bearing carboxyl groups is grafted to a carboxyl functional amorphous polyester resin to produce a binder suitable to provide powder coatings with excellent surface appearance, very good flow and improved resistance to outdoor exposure.

The WO 97 20985 relates to thermosetting powder compositions comprising as binder a mixture of an amorphous polyester containing carboxyl groups, of a semi-crystalline polyester containing carboxyl groups and of a crosslinking agent having functional groups capable of reacting with the carboxyl groups of these polyesters, and in particular to thermosetting powder compositions which, by curing, give coatings which have very good weatherability and have good mechanical properties.

The GB 2244060 relates to a thermosetting powder coating composition comprising a binder, a mixture of a carboxylic acid-functional polyester component and a curing agent having groups reactive with carboxylic acid groups, characterized in that the carboxylic acid-functional component comprises a semi-crystalline polyester.

The US 5,614,323 formulations disclosed are thermosetting, powder coating compositions comprised of a blend of semi-crystalline and amorphous polyesters and certain adducts of the 1,3-diazetidine-2,4-dione dimer of isophorone diisocyanate which are readily curable at temperatures and times commonly used to cure (cross-link) powder coatings.

The industry has tried to solve several issues of the powder coating industry by making resins blends of semi-crystalline polyester and amorphous polyester resins. The formulations so far have still the problem of the poor storage stability of the formulated powder in hot and humid environment due to the presence of the semi-crystalline polyester resin. Therefore it is still a challenge for the industry to solve the above problems.
The above prior art has tried to improve the flow of the cured film by the use of a semi-crystalline polyester resin based on the following theory. Melting of the powder coating and its crosslinking occur at the same time in the oven. Viscosity reduction during the hot melting of amorphous polyesters isn't so sharp to allow excellent flow before the start of crosslinking. Semi-crystalline polyesters have a sharp melting point but are not suitable as single powder coatings binder. The present invention allows to produce powder coatings with excellent surface appearance and very good flow by a two components binder (the novel polyester resin and a crosslinking agent) simplifying the existing one based on three components (amorphous polyester, semi-crystalline polyester and crosslinking agent).

Scope of this technology is to produce a binder which keeps advantages of both polymers and suitable for use in the same way of conventional amorphous polyesters. The amorphous polyester by itself is not the relevant part of the invention but the grafting process is, along with the liquid semi-crystalline polyester.

Prior art refers to solid semi-crystalline polyesters mechanically blended with solid amorphous polyesters (and a suitable crosslinker) as first stage of a powder coating composition. WO 97 20985 application refers also to the possibility to "melt blend" the solid semi-crystalline polyester with the solid amorphous polyester but without any reaction among them.

The inventors discovered surprisingly that the semi-crystalline polymer reacted with the amorphous polyester provides an improvement of outdoor exposure resistance compared to the unmodified polyester and the flow of the cured film. However, maintaining the storage stability of the powder to the level of the amorphous based system. This technology is potentially applicable to a broad range of existing polyester resins by a process modification (grafting stage). The invention describes the use of a liquid semi-crystalline polyester and the subsequent grafting (chemical reaction) of such a liquid semi-crystalline polyester to an amorphous polyester.
An amorphous polyester containing hydroxyl groups according to the invention, is prepared from an acid constituent comprising from 20 to 100% moles of terephthalic acid or isophathalic acid, from 0 to 45% moles of at least one dicarboxylic acid or anhydride other than terephthalic or isophathalic acid and from 0 to 25% moles of polycarboxylic acid or anhydride containing at least three carboxyl groups and from an alcohol constituent comprising from 60 to 100% moles of neopentylglycol, from 0 to 40% moles of at least one dihydroxylated compound other than neopentylglycol and from 0 to 20% moles of polyhydroxylated compound containing at least 3 hydroxyl groups and from 0,1 to 10% moles of aliphatic, cycloaliphatic, the said amorphous polyester having a glass transition (Tg) of at least 60°C, and a hydroxyl number of 25 to 100mgKOH/g, preferably 40 to 55mgKOH/g.

Raw materials from renewable resources could also be used as source of raw materials, like sorbitol derivatives, dimer fatty acids, glycerol (derived from the production of bio-diesel), lactic acid derivatives, fructose derivatives, mannitol derivatives, furfural derivatives, pyrazol derivatives and the like. These monomers to produce the claimed resin compositions could be use alone or in combination with petrochemical based monomers.
The hydroxyl terminated polyester is formed through the esterification or condensation reaction of:
(1) a dicarboxylic acid selected from the group consisting of isophthalic acid (IPA), terephthalic acid (TPA) 1,4-cyclohexane dicarboxylic acid (CHDA), 1,4-cyclohexane dimethylcarboxylic acid and mixtures thereof, with at least about 30 mole percent of the aromatic acid being terephthalic; and
(2) a diol selected from the group consisting of neopentyl glycol, cyclohexane dimethanol, 1,6 hexane diol, ethylene glycol, propylene glycol, 1,3-butylene glycol, 1,4-butane diol, pentane diol, hexylene glycol, diethylene glycol, dipropylene glycol, triethylene glycol, 2-butyl-2-ethyl diol, 1,3-propanediol, 2,2,4-trimethyl-1,3-pentane diol, hydrogenated bisphenol A, 1,3-pentane diol, 3-hydroxy-2,2-diemthyl propyl 3-hydroxy-2,2-dimethyl-propanoate, methyl propane diol, 2-methyl, 2-ethyl, 1,3-propane diol, vinyl cyclohexane diol and mixtures thereof.
In an alternative aspect of the invention, neopentyl glycol can be replaced with a diol selected from the group consisting of 2-butyl-2-ethyl-1,3 propanediol (BEPD), 1,4 butane diol, 3-hydroxy-2,2-dimethyl propyl-3-hydroxy-2,2-dimethyl propionate, unoxol 6 diol, methyl propane diol, 2-methyl-1,3-propane diol (MPD), hydroxylpivalyl hydroxypivalate (HPHP), hydrogenated Bisphenol A and mixtures thereof, and addition of polyols, such as trimethylolpropane (TMP), trimethylolethane (TME), pentaerythritol (PE), ditrimethylolpropane (DI-TMP). Optionally, the starting mixture for the esterification or condensation reaction may further include:
(a) from 0.01 to 5 mole percent of a polyacid selected from the group consisting of trimellitic anhydride (TMA), citric acid, and mixtures thereof; and
(b) from 0.01 to 4 mole percent of a polyol selected from trimethylol propane, trimethylolethane, pentaerythritol, ditrimethylolpropane, and mixtures thereof.
It will be appreciated that the incorporation of the polyacid or the polyol may be performed during the first step or in the second step of preparation of the present resin.

### Example 1

Two-Stage synthesis of semi-crystalline polyester containing primary carboxyl groups:
First stage :52,49 parts of neopentylglycol 90% are placed in a flask under nitrogen and with stirring with 61,78 parts of adipic acid, 0.046 parts of MBTO as catalyst and 0,07 parts of triphenylphosphite as antioxidant and heated to 200°C. The reaction is continued at atmospheric pressure until a prepolymer containing hydroxyl groups is thus obtained which has the following characteristics: acid number 18.5 mg KOH/g, Hydroxyl number 49.5 mg KOH/g, ICI viscosity at 150°C 84 mPa.s.
Second stage :6,79 parts of adipic acid are added at 200°C to the prepolymer obtained in the first stage. The reaction is continued at 205°C until Acid number 44 mg KOH/g, ICI viscosity at 150°C 132 mPa.s. Then 0.024 parts of triphenylphosphite are added and the content of the flask is placed under vacuum (residual pressure 50 mmHg) until the polyester obtained has the following characteristics: Acid number 32.9 mg KOH/g, ICI viscosity at 150°C 258 mPa.s, OH number 9 mg KOH/g, Tg (DSC; 10°C/min) < -40°C, Mn 2696.

### Example 2

Three-Stage synthesis of carboxyl functional amorphous polyester containing the semi-crystalline polyester (22PO318):
First stage : 45.14 parts of neopentylglycol 90% are placed in a flask under nitrogen and with stirring with 51.71 parts of terephthalic acid, 6.22 parts of isophtalic acid, 0.07 parts of MBTO as catalyst and heated to 235°C. The reaction is continued at atmospheric pressure until a prepolymer containing hydroxyl groups is thus obtained which has the following characteristics: acid number 11.9 mg KOH/g, Hydroxyl number 61 mg KOH/g, ICI viscosity at 200°C 680 mPa.s.
Second stage : 6.69 parts of isophthalic acid, 3.15 parts of adipic and 0.09 parts of triphenylphosphite are added at 220°C to the prepolymer obtained in the first stage. The reaction is continued at 230°C until Acid number 45.4 mg KOH/g, ICI viscosity at 200°C 1140 mPa.s.
Third stage, grafting stage : 5 parts of semi-crystalline polyester (example 1), is added to the prepolymer obtained in the second stage. The reaction is continued at 215°C until Acid number 39.6 mg KOH/g, ICI viscosity at 200°C 1140 mPa.s then the content of the flask is placed under vacuum (residual pressure 50 mmHg) until the polyester obtained has the following characteristics: Acid number 34.2 mg KOH/g, ICI viscosity at 200°C 2160 mPa.s, OH number 9 mg KOH/g, Tg (DSC; 10°C/min) 49°C, Mn 2390. The polyester obtained is left to cool to 190°C and added to it are 0.03 parts of triphenylphosphite, 0.1 parts of MTBHQ and 0.24 parts of tris-2-ethylexylamine. After stirring the mixture for 20 minutes the polyester is removed from the flask.

### Comparative example 1

Two-Stage synthesis of carboxyl functional amorphous polyester (2 PO 318) :
First stage 47.56 parts of neopentilglycol 90% are placed in a flask under nitrogen and with stirring with 54.48 parts of terephthalic acid, 6.54 parts of isophtalic acid, 0.07 parts of MBTO as catalyst and heated to 235°C. The reaction is continued at atmospheric pressure until a prepolymer containing hydroxyl groups is thus obtained which has the following characteristics: acid number 11.1 mg KOH/g, Hydroxyl number 61 mg KOH/g, ICI viscosity at 200°C 605 mPa.s. Second stage 7.06 parts of isophthalic acid, 3.32 parts of adipic and 0.09 parts of triphenylphosphite are added at 220°C to the prepolymer obtained in the first stage. The reaction is continued at 230°C until Acid number 46.5 mg KOH/g, ICI viscosity at 200°C 1240 mPa.s then the content of the flask is placed under vacuum (residual pressure 50 mmHg) until the polyester obtained has the following characteristics: Acid number 35.8 mg KOH/g, ICI viscosity at 200°C 3120 mPa.s, OH number 8 mg KOH/g, Tg (DSC; 10°C/min) 58.3°C, Mn 2580. The polyester obtained is left to cool to 190°C and added to it are 0.03 parts of triphenylphosphite, 0.1 parts of MTBHQ and 0.24 parts of tris-2-ethylexylamine. After stirring the mixture for 20 minutes the polyester is removed from the flask.

### Comparative example 2

Melt blending of carboxyl functional amorphous polyester with semi-crystalline polyester (17 PO 318):
95 parts of the carboxyl functional amorphous polyester, prepared as described in comparative example 1 (2 PO 318), are placed in a flask and heated to 190°C under nitrogen and with stirring until completely melted. Acid number 35.6 mg KOH/g, ICI viscosity at 200°C 3100 mPa.s were measured, then 5 parts of carboxyl functional semi-crystalline polyester were added at 190°C. After stirring the mixture for 20 minutes the polyester is removed from the flask. The polyester obtained has the following characteristics: Acid number 35 mg KOH/g, ICI viscosity at 200°C 2400 mPa.s, OH number 8 mg KOH/g, Tg (DSC; 10°C/min) 49.7°C, Mn 2390.

### Example 3

### Preparation of thermosetting powder coating compositions:

Powder coatings were prepared from the above described polyesters (17 PO 318 and 22 PO 318) and a standard polyester as reference (2 PO 318) according to the following formulation having a binder: crosslinking agent ratio of 95:5. The polyesters were evaluated by the following method: 308.7 parts of the granulated polyester resin (binder) was dry mixed with 16.3 parts of Primid XL 552 (crosslinker), 5 parts of Resiflow PV 88 (flow agent), 2 parts of benzoin (degassing agent) and 168 parts of titanium dioxide (Kronos 2160) and subsequently introduced into an extruder (APV mod MP 19). The extrudate was cooled, ground and sieved. The sieved fraction smaller than 105 microns was collected and used as the powder coating.

**Table with powder coatings formulation:**

| Formulations | | | |
|---|---|---|---|
| | 1 | 2 | 3 |
| Raw material | Weight in grams | | |
| 2 PO318(reference) | 308.7 | - | - |
| 17 PO 318 (blend) | - | 308.7 | - |
| 22 PO 318 (invention) | | | 308.7 |
| XL 552 Primid | 16.3 | 16.3 | 16.3 |
| Worlee Resiflow PV 88 | 5 | 5 | 5 |
| Benzoin | 2 | 2 | 2 |
| TiO₂ Kronos 2166 | 168 | 168 | 168 |
| Total | 500 | 500 | 500 |
| Pigment/ binder | 95/5 | 95/5 | 95/5 |
| Polyester/ Crosslinker | 65/35 | 65/35 | 65/35 |

The powder coating was electrostatically sprayed onto steel panels and chromated aluminium panels. The physical properties of the formulated powder coating are determined after a 10 minute cure at 180°C for layer thickness from 60 to 80 micrometres.

**Table with powder coatings properties:**

| Properties | | | |
|---|---|---|---|
| | 1 | 2 | 3 (invention) |
| Flow PCI | 6+ | 6 | 6-7 |
| Gloss 60°/20° | 95/85 | 93/74 | 95/82 |
| MEK resistance (0 worse, 5 max) | 5 | 5 | 5 |
| Bending 180° | pass | pass | pass |
| Impact direct/reverse | 160/160 | 160/160 | 160/160 |
| QUV-B 50 gloss red(in hours) | 350 | 380 | 380 |

It is evident that the flow PCI of 17 PO 318 worsen to 6 from 6+ of the reference, the Gloss at 60°/20° drops to 93/74 from 95/83 of the reference while the QUV-B test demonstrates the 50% gloss reduction occurs after 380 hour compared to 350 hours of the reference.

The physical blending (17 PO 318) allows to improve the weathering resistance of the amorphous polyester but is not able to enhance the flow and besides reduces the powder coating gloss. The grafting (22 PO 318) instead, bonding the two polymers, makes them "compatible" which leads to a polyester resin suitable to produce powder coatings with a remarkably better flow at the same high gloss of the unmodified amorphous polyester. The grafting doesn't impair the improved weathering resistance given by the semi-crystalline polyester.

## Claims

1. An amorphous polyester resin grafted with a semi-crystalline polyester resin curable by a crosslinking agent having functional groups capable of reacting with the carboxylic acid groups of the resulting polyester.

2. The polyester of claim 1 wherein the amorphous polyester is based on an acid constituent comprising from 20 to 100% moles of terephthalic acid or isophthalic acid, from 0 to 45% moles of at least one dicarboxylic acid or anhydride other than terephthalic or isophthalic acid and from 0 to 25% moles of polycarboxylic acid or anhydride containing at least three carboxyl groups and from an alcohol constituent comprising from 60 to 100% moles of neopentylglycol, from 0 to 40% moles of at least one dihydroxylated compound other than neopentylglycol and from 0 to 20% moles of polyhydroxylated compound containing at least 3 hydroxyl groups and from 0,1 to 10% moles of aliphatic, cycloaliphatic.

3. The polyester of claim 1 wherein the semi-crystalline is based on an aliphatic polyol and an aliphatic polyacid **characterized** with an acid number of 35 to 55mg KOH/g.

4. The polyester of claims 1 to 3 **characterized in that** the grafted polyester resin has an acid number of 30 to 45 mg KOH/g.

5. Compositions comprising the grafted polyester according to claim 1, wherein the crosslinking agent is a polyepoxy compound.

6. Compositions comprising the grafted polyester according to claim 5, wherein the polyepoxy composition is triglycidylisocyanurate.

7. Compositions comprising the grafted polyester according to claim 1, wherein the crosslinking agent is a β-hydroxyalkylamide.

8. Compositions comprising the grafted polyester according to claim 5, wherein the crosslinking agent is an acrylic copolymer containing glycidyl groups.

9. A powder coating formulation comprising a composition according to claims 5 to 8.

10. A process to prepare the grafted polyester resin of claim 1 consisting in a preparation of an amorphous polyester according to the composition of claim 2 which is subsequently grafted with a semi-crystalline polyester as in claim 3 with an acid number of 30 to 45 mg KOH/g.
